# EUROPÄISCHE PATENTSCHRIFT

(11) **EP 3 659 322 B1**
(45) Veröffentlichungstag und Bekanntmachung des Hinweises auf die Patenterteilung: **24.01.2024**
(21) Anmeldenummer: 18769089.6
(22) Anmeldetag: 03.09.2018
(51) Int. Cl.: B61L 15/00, G06F 9/4401, G06F 8/60, H04L 67/12, H04L 67/00, H04L 61/5014, H04L 61/5038

(54) **SOFTWAREVERTEILUNGSVERFAHREN, UND SOFTWAREVERTEILUNGSSYSTEM FÜR EIN SPURGEBUNDENES FAHRZEUG**
SOFTWARE DISTRIBUTION METHOD AND SOFTWARE DISTRIBUTION SYSTEM FOR A TRACK-GUIDED VEHICLE
PROCÉDÉ DE DISTRIBUTION DE LOGICIEL ET SYSTÈME DE DISTRIBUTION DE LOGICIEL POUR VÉHICULE GUIDÉ

(30) Priorität: 22.09.2017 DE 102017216849
(43) Veröffentlichungstag der Anmeldung: 03.06.2020
(73) Patentinhaber: Siemens Mobility GmbH, 81739 München (DE)
(72) Erfinder: BRAUN, Thorsten, 91088 Bubenreuth (DE); DOMMEL, Christoph, 91052 Erlangen (DE); HUSEMANN, Dirk, 91052 Erlangen (DE); ZANZINGER, Michael, 91126 Schwabach (DE)
(74) Vertreter: Siemens Patent Attorneys
(86) Internationale Anmeldenummer: PCT/EP2018/073564
(87) Internationale Veröffentlichungsnummer: WO 2019/057471

(56) Entgegenhaltungen:
- EP-A1- 2 728 809
- INTEL: "Preboot Execution Environment (PXE) Specification, Version 2.1", INTERNET CITATION, 20. September 1999 (1999-09-20), XP002402606, Gefunden im Internet: URL:http://www.pix.net/software/pxeboot/ar chive/pxespec.pdf [gefunden am 2006-10-11]
- PATRICK MOTOROLA BCS M: "DHCP Relay Agent Information Option; rfc3046.txt", DHCP RELAY AGENT INFORMATION OPTION; RFC3046.TXT, INTERNET ENGINEERING TASK FORCE, IETF; STANDARD, INTERNET SOCIETY (ISOC) 4, RUE DES FALAISES CH- 1205 GENEVA, SWITZERLAND, 1. Januar 2001 (2001-01-01), XP015008829,
- Anonymous: "Preboot Execution Environment - Wikipedia, the free encyclopedia", , 8. September 2017 (2017-09-08), XP055525825, Gefunden im Internet: URL:https://en.wikipedia.org/w/index.php?t itle=Preboot_Execution_Environment&oldid=7 99556530 [gefunden am 2018-11-21]

## Beschreibung

Die Erfindung betrifft ein Softwareverteilungsverfahren für ein Kommunikationsnetz eines spurgebundenen Fahrzeugs sowie ein Softwareverteilungssystem für ein spurgebundenes Fahrzeug. Bei dem Softwareverteilungsverfahren ist eine Komponente an einen Zugangspunkt des Kommunikationsnetzes angeschlossen.

Grundsätzlich sind Kommunikationsnetze in Fahrzeugen, insbesondere spurgebundenen Fahrzeugen, bekannt, welche mehrere Komponenten zum Ausführen von Software (d. h. einem Computerprogramm) aufweisen. Die Komponenten sind über das Kommunikationsnetz datentechnisch miteinander verbunden. Dabei ist es wünschenswert, die jeweilige Komponente mit einer für den Betrieb im spurgebundenen Fahrzeug vorgesehenen Software zu versehen.

Bisher wird die Software bereitgestellt, indem ein Wartungscomputer datentechnisch mit der Komponente verbunden und die Software mittels des Wartungscomputers auf der Komponente installiert wird.

Zudem ist es bekannt, dass die Software von dem Hersteller der Komponente bereits vor dem Einsatz im spurgebundenen Fahrzeug auf der Komponente installiert wird. Eine Konfiguration der Komponente erfolgt dabei, indem ein Wartungscomputer datentechnisch mit der Komponente verbunden und gemäß dem vorgesehenen Einsatz der Komponente im spurgebundenen Fahrzeug konfiguriert wird.

Das Dokument INTEL: "Preboot Execution Environment (PXE) Specification, Version 2.1 ", INTERNET CITATION, 20. September 1999 (1999-09-20), XP002402606 beschreibt ein System, mit dem netzwerkfähige Rechner, sogenannte Clients, von einem Server ausgehend über ein lokales Rechnernetz booten können. Der Server stellt die dafür erforderlichen Daten und Bootimages zur Verfügung.

Das Dokument PATRICK MOTOROLA BCS M: "DHCP Relay Agent Information Option; rfc3046.txt", DHCP RELAY AGENT INFORMATION OPTION; RFC3046.TXT, INTERNET ENGINEERING TASK FORCE, IETF; STANDARD, INTERNET SOCIETY (ISOC) 4, RUE DES FALAISES CH-1205 GENEVA, SWITZERLAND, 1. Januar 2001 (2001-01-01), XP015008829, beschreibt die sogenannte Realy Agent Information Option von DHCP (Dynamic Host Configuration Protocol).

EP 2 728 809 A1 beschreibt ein IP-Adressen-Verteilungssystem, welches ein Netzwerk mit einer Mehrzahl von Switch-Geräten und eine Mehrzahl von IP-Adressen-Verteilungsgeräten, die mit dem Netzwerk verbunden sind, aufweist. Die Switch-Geräte sind in zwei oder mehrere Gruppen unterteilt und unterbrechen ein IP-Adressenanfragesignal, welches von einem Gerät übertragen wird, das die Zuweisung einer IP-Adresse an einem physikalischen Port beantragt, an dem ein Switch-Gerät einer anderen Gruppe angeschlossen ist.

Vor diesem Hintergrund ist es Aufgabe der Erfindung, die Verteilung von Software in dem Kommunikationsnetz zu vereinfachen und/oder die Zuverlässigkeit der Verteilung zu erhöhen. Diese Aufgabe wird durch ein Softwareverteilungsverfahren der eingangs genannten Art gelöst, welches durch Anspruch 1 definiert ist.

Der Erfindung liegt die Erkenntnis zu Grunde, dass Komponenten, die für einen Betrieb in einem spurgebundenen Fahrzeug vorgesehen sind, mit einer beim Hersteller installierten Software in der Regel im spurgebundenen Fahrzeug nicht betrieben werden können. Daher ist es bei der Inbetriebsetzung erforderlich, Software auf der Komponente zu installieren und/oder eine Konfiguration der Komponente vorzunehmen. Bei den bisherigen Lösungen ist die Verteilung von Software an die Komponente und Konfiguration der Komponente logistisch und wartungstechnisch mit hohem Aufwand verbunden. Die Erfindung behebt dieses Problem, indem der Komponente das Laden einer Installations-Software anhand der Netzadresse der ersten Verteilungsserver-Einheit ermöglicht wird.

Durch die Erfindung ergibt sich der wesentliche Vorteil, dass bei der Installation von Software und der Konfiguration der Komponente ein manueller Arbeitsschritt, welcher durch Service-Personal auszuführen ist, vermieden wird. Zudem werden Fehlerquellen beim manuellen Versenden von Software-Updates an Wartungspersonal, welches den Wartungscomputer bedient, vermieden. Im Ergebnis werden der logistische und wartungstechnische Aufwand und die Fehleranfälligkeit bei der Installation durch Wartungspersonal vermieden. Gleichzeitig kann eine Softwareverteilung zeitnah nach Anschluss der Komponente an das Kommunikationsnetz durchgeführt werden. Dies ist insbesondere für Komponenten des Kommunikationsnetzes von Vorteil, die in ihrer Funktion für Security (Schutz des Kommunikationsnetzes vor seiner Umwelt) und Safety (Schutz der Umwelt vor dem Kommunikationsnetz) relevant sind.

Zudem ergibt sich durch die Erfindung der weitere Vorteil, dass Komponenten nicht mit einer für den Betrieb im spurgebundenen Fahrzeug vorgesehenen Software beim Hersteller versehen und mit dieser an den Betreibern des spurgebundenen Fahrzeugs ausgeliefert werden müssen.

Der Fachmann versteht den Begriff "Software" vorzugsweise als ein Computerprogramm, welches durch eine Recheneinheit ausführbar ist. Die Ausführung des Computerprogramms erfolgt anhand eines Computerprogrammcodes, der Anweisungen enthält, die die Recheneinheit für die Ausführung befolgt. Die Verteilung der Software in dem Kommunikationsnetz erfolgt vorzugsweise als Verteilung in Form eines Softwarepakets. Das Softwarepaket umfasst vorzugsweise das ausführbare Computerprogramm und/oder Konfigurationsdaten und/oder weitere Elemente. Die weiteren Elemente umfassen vorzugsweise Skripte, Multimedia-Daten, Anzeige-Daten, Dokumentationen und/oder Quelltexte, etc.

Die Verteilung der Software erfolgt vorzugsweise über das Kommunikationsnetz des spurgebundenen Fahrzeugs.

Das spurgebundene Fahrzeug ist vorzugsweise als Schienenfahrzeug ausgebildet. Insbesondere aufgrund der Anforderungen an Echtzeit, Security und Safety bei Fahrzeugen dieser Art ist die Anwendung der erfindungsgemäßen Lösung besonders vorteilhaft.

Der Fachmann versteht die Formulierung "Bereitstellen" vorzugsweise dahingehend, dass die Verteilung der Software an die Komponente mittels der Konfigurationsserver-Einheit ausgelöst wird. Alternativ oder zusätzlich ist die Konfigurationseinheit ausgebildet, der Komponente die Netzadresse der ersten Verteilungsserver-Einheit auf eine Anfrage der Komponente hin bereitzustellen.

Erfindungsgemäß ist die "Komponente" eine Datenendeinrichtung (engl. "data terminal equipment"). Die Komponente kann eine Komponente eines Systems sein, welches für eine bestimmte Funktion im Betrieb des spurgebundenen Fahrzeugs vorgesehen ist. So kann die Komponente beispielsweise eine Komponente, wie beispielsweise eine Anzeigeeinheit, eines Fahrgastinformationssystems sein. Alternativ bildet die Komponente allein das System.

Das Kommunikationsnetz umfasst vorzugsweise ein Ethernet-Netzwerk oder ist als solches ausgebildet. Weiter vorzugsweise erfolgt eine Kommunikation zwischen Komponenten, die an das Kommunikationsnetz angeschlossen sind, unter Anwendung von TCP/IP (TCP: Transmission Control Protocol; IP: Internet Protocol).

Weiter vorzugsweise umfasst das Kommunikationsnetz ein Betreibernetz des spurgebundenen Fahrzeugs oder besteht aus diesem. Das Betreibernetz bildet vorzugsweise ein Teilnetz des Kommunikationsnetzes, welches physikalisch von einem Steuernetz des Kommunikationsnetzes getrennt ist. An das Betreibernetz sind beispielsweise Komponenten eines Fahrgastzählsystems zum Zählen von Fahrgästen, eines Fahrgastinformationssystems (FIS) zur Informationsvermittlung an Fahrgäste des Schienenfahrzeugs und/oder eines Kameraüberwachungssystems zur Überwachung des Innen- und Außenbereichs des Schienenfahrzeugs an das Betreibernetz datentechnisch angeschlossen. Das Betreibernetz wird fachmännisch häufig als "Train Operator Network" bezeichnet.

Erfindungsgemäß wird die bereitgestellte Netzadresse an die angeschlossene Komponente übertragen.

Das erfindungsgemäße Softwareverteilungsverfahren geht von einer Konstellation aus, bei der die Komponente an den Zugangspunkt angeschlossen ist. Vorzugsweise umfasst das Verfahren, dass die Komponente vorab an den Zugangspunkt angeschlossen wird und die Netzadresse auf das Anschließen hin bereitgestellt wird.

Vorzugsweise wird auf das Anschließen der Komponente an den Zugangspunkt hin eine Zugangspunkt-Information zum Identifizieren des Zugangspunkts ausgesendet und über das Kommunikationsnetz an die Konfigurationsserver-Einheit übertragen. Weiter vorzugsweise stellt die Konfigurationsserver-Einheit die Netzadresse auf den Empfang der Zugangspunkt-Information hin bereit, insbesondere anhand der Zugangspunkt-Information.

Der Fachmann versteht die Formulierung "Netzadresse einer ersten Verteilungsserver-Einheit" vorzugsweise dahingehend, dass die Netzadresse zum Adressieren der ersten Verteilungsserver-Einheit bei Anwendung des Kommunikationsprotokolls dient.

Weiter vorzugsweise umfasst der Zugangspunkt eine Switch-Einheit, wobei eine Switch-Information zum Identifizieren der Switch-Einheit an die Konfigurationsserver-Einheit gesendet wird und die Netzadresse anhand der Switch-Information bereitgestellt wird.

Der Fachmann versteht den Begriff "Switch-Einheit" als ein Kopplungselement, welches zwei oder mehrere Komponenten des Kommunikationsnetzes miteinander verbindet. Ein Kopplungselement dieser Art wird fachmännisch als Switch bezeichnet. Mit anderen Worten: Die Switch-Einheit bildet einen Netzwerkknoten des Kommunikationsnetzes.

Die Switch-Einheit umfasst weiter vorzugsweise mindestens einen Port, wobei eine Portinformation zum Identifizieren des Ports an die Konfigurationsserver-Einheit gesendet wird und die Netzadresse anhand der Portinformation bereitgestellt wird. Der Fachmann versteht den Begriff "Port" vorzugsweise als eine Schnittstelle der Switch-Einheit, insbesondere eine Anschlussbuchse zum Anschließen der Komponente. Vorzugsweise wird die Portinformation zusätzlich zu der Switch-Information an die Konfigurationsserver-Einheit gesendet.

Die Switch-Information und die Portinformation bilden vorzugsweise ein Informationspaar, wobei dem Informationspaar mittels einer Datenbank der Konfigurationsserver-Einheit die Netzadresse zugeordnet wird.

Die Konfigurationsserver-Einheit umfasst vorzugsweise eine Speichereinheit zum Speichern der Datenbank. Die Datenbank hat den Zweck, dem von der Switch-Einheit ausgesendeten und mittels der Konfigurationsserver-Einheit empfangenen Informationspaar die zugehörige Netzadresse zuzuordnen. Mit anderen Worten: Die Konfigurationsserver-Einheit liest die Netzadresse auf Basis des Informationspaares aus der Datenbank. Die ausgelesene Netzadresse sendet die Konfigurationsserver-Einheit an die angeschlossene Komponente.

Die erste Verteilungsserver-Einheit umfasst vorzugsweise eine Speichereinheit zum Speichern einer Datenbank, welche der Komponente die Installations-Software zuordnet. Die Speicher-einheit dient weiter vorzugsweise zum Speichern der Installations-Software.

Die Installations-Software umfasst vorzugsweise einen Kernel, einen Device-Tree und eine Ausgangspartition im Arbeitsspeicher. Die Ausgangspartition im Arbeitsspeicher wird fachmännisch häufig auch als "initrd" (initrd: initial R_AM disk; RAM: Random Access Memory) bezeichnet.

Das erfindungsgemäße Softwareverteilungsverfahren umfasst ferner: Anschließen der Komponente an einen Zugangspunkt einer Mehrzahl von Zugangspunkten des Kommunikationsnetzes, wobei das Bereitstellen der Netzadresse in Abhängigkeit des Zugangspunkts, an den die Komponente angeschlossen ist, erfolgt.

Weiter vorzugsweise stellt die erste Verteilungsserver-Einheit die Installations-Software an die Komponenten in Abhängigkeit des Zugangspunkts, an den die Komponente angeschlossen ist, zum Laden bereit.

Bei einer weiteren bevorzugten Ausführungsform des erfindungsgemäßen Softwareverteilungsverfahrens wird das Laden durch Ausführen eines Bootloader-Skripts mittels der Komponente ausgelöst. Vorzugsweise erfolgt das Laden durch Ausführen des Bootloader-Skripts. Insbesondere umfasst das Ausführen des Bootloader-Skripts ein Ausführen einer Bootloader-Software, vorzugsweise einer Universal-Bootloader-Software.

Bei einer weiteren bevorzugten Ausführungsform des erfindungsgemäßen Softwareverteilungsverfahrens umfasst die erste Verteilungsserver-Einheit einen TFTP-Server. Eine Ausbildung der ersten Verteilungsserver-Einheit als TFTP-Server (TFTP: Trivial File Transfer Protocol) ist insbesondere bei der Ausführung eines Bootloader-Skripts vorteilhaft, da das Bootloader-Skript besonders einfach implementiert werden kann.

Bei einer weiteren bevorzugten Ausführungsform des erfindungsgemäßen Softwareverteilungsverfahrens umfasst die Konfigurationsserver-Einheit einen DHCP-Server(DHCP: Dynamic Host Configuration Protocol).

Vorzugsweise umfasst das Softwareverteilungsverfahren: Übertragen der bereitgestellten Netzadresse an die Komponente unter Anwendung des DHCP. Vorzugsweise werden die Zugangspunkt-Information, die Switch-Information, die Port-Information und/oder das Informationspaar unter Anwendung von DHCP Option 82 an die Konfigurationsserver-Einheit übertragen.

Gemäß einer weiteren bevorzugten Ausführungsform des erfindungsgemäßen Softwareverteilungsverfahrens erfolgt das Laden der Installations-Software von der ersten Verteilungsserver-Einheit, wenn ein Laden einer Installationssoftware von einer an die Komponente datentechnisch angeschlossenen ersten Speicher-Einheit fehlschlägt. Mit anderen Worten: Bevor die Installationssoftware mittels der Komponente von der ersten Verteilungsserver-Einheit geladen wird, wird im Rahmen dieser Ausführungsform zunächst versucht, die Installationssoftware von der ersten Speicher-Einheit zu laden.

Die erste Speicher-Einheit ist vorzugsweise als SDHC-Karte ausgebildet (SDHC: Secure Digital High Capacity). Weiter vorzugsweise ist die erste Speicher-Einheit datentechnisch an die Komponente angeschlossen, indem diese in der Komponente montiert, vorzugsweise eingesteckt ist.

Das Laden der Installations-Software von der ersten Speicher-Einheit umfasst vorzugsweise ein Zugreifen auf ein Dateisystem, beispielsweise ein Extended File System (z.B. ext2, ext3 oder ext4). Weiter vorzugsweise umfasst das Laden ein Verifizieren, dass das Dateisystem als gültig gekennzeichnet ist. Weiter vorzugsweise umfasst das Laden ein Laden eines Kernels und eines Device-Tree von einem Boot-Verzeichnis des Dateisystems und Ausführen des Kernels mittels der Komponente von der ersten Speichereinheit. Der Device-Tree kann im Kernel enthalten sein.

Das Laden der Installationssoftware von der ersten Speicher-Einheit gilt vorzugsweise als fehlgeschlagen, wenn auf der ersten Speicher-Einheit kein gültiges Dateisystem vorhanden ist oder wenn die erste Speicher-Einheit nicht angeschlossen ist. Ein auf der ersten Speichereinheit vorhandenes Dateisystem gilt vorzugsweise als gültig, wenn der Inhalt einer gespeicherten Stempeldatei (stamp file) geladen werden kann.

Bei einer weiteren bevorzugten Ausführungsform des erfindungsgemäßen Softwareverteilungsverfahrens wird ein Laden einer Installationssoftware von einer an die Komponente datentechnisch angeschlossenen zweiten Speicher-Einheit initiiert, wenn das Laden der Installationssoftware von der ersten Verteilungsserver-Einheit fehlschlägt. Daraus ergibt sich der Vorteil, dass bei einer Fehlfunktion beispielsweise der ersten Verteilungsserver-Einheit oder beispielsweise einer fehlenden datentechnischen Verbindung zur Verteilungsserver-Einheit das Laden der Installations-Software von der zweiten Speicher-Einheit erfolgen kann.

Vorzugsweise ist die zweite Speicher-Einheit mittels eines USB-Ports (USB: Universal Serial Bus) der Komponente an diese angeschlossen. Weiter vorzugsweise ist die zweite Speicher-Einheit als USB-Stick ausgebildet.

Das Laden der Installations-Software von der ersten Speicher-Einheit umfasst vorzugsweise ein Zugreifen auf ein Dateisystem, insbesondere ein Extended File System (z.B. ext2, ext3 oder ext4). Weiter vorzugsweise umfasst das Laden ein Laden eines Kernels und Device-Tree von einem Boot-Verzeichnis des Dateisystems und Ausführen des Kernels mittels der Komponente von der ersten Speichereinheit.

Eine bevorzugte Ausführungsform des erfindungsgemäßen Softwareverteilungsverfahrens umfasst: Ausführen der geladenen Installationssoftware, wobei das Ausführen ein Laden einer für die Komponente vorgesehenen Basissoftware mittels der Komponente von einer zweiten Verteilungsserver-Einheit umfasst.

Die Installations-Software ist vorzugsweise ausgebildet, Daten von der zweiten Verteilungsserver-Einheit zu laden und dient unter anderem zum Laden der Basissoftware von der zweiten Verteilungsserver-Einheit. Weiter vorzugsweise ist die Installations-Software ausgebildet, mindestens eine an die Komponente datentechnisch angeschlossene Speichereinheit (beispielsweise eine SDHC-Karte) zu partitionieren, ein Dateisystem (beispielsweise ein ext4-Dateisystem) zu erzeugen und die Basissoftware zu installieren.

Bei einer bevorzugten Weiterbildung umfasst die zweite Verteilungsserver-Einheit einen HTTP-Server (Hypertext Transfer Protocol). Auf diese Weise kann die Basissoftware mit gängigen Kommunikationsprotokollen geladen werden, wodurch sich das Softwareverteilungsverfahren einfach implementieren lässt.

Eine weitere bevorzugte Weiterbildung umfasst: Ausführen der Basissoftware bei einem Hochfahren der Komponente, wobei das Ausführen ein Laden und Installieren eines für die Komponente vorgesehenen Softwarepakets umfasst.

Vorzugsweise wird das Softwarepaket von der zweiten Verteilungsserver-Einheit geladen. Weiter vorzugsweise erfolgt das Laden und Installieren des Softwarepakets bei einem ersten Hochfahren der Komponente nach dem Installieren der Basissoftware. Weiter vorzugsweise erfolgt das Installieren des für die Komponente vorgesehenen Softwarepakets, wenn sich in einem Prüfschritt beim Ausführen der Basissoftware ergibt, dass das Installieren des Softwarepakets noch nicht erfolgt ist.

Gemäß einer weiteren bevorzugten Ausführungsform des erfindungsgemäßen Softwareverteilungsverfahrens ist die erste und/oder zweite Verteilungsserver-Einheit eine Verteilungsserver-Einheit des spurgebundenen Fahrzeugs. Hierdurch ergibt sich der Vorteil, dass für die erfindungsgemäße Softwareverteilung eine Kommunikation zwischen dem Fahrzeug und einer Komponente außerhalb des Fahrzeugs, beispielsweise auf der Landseite, nicht erforderlich ist. Das Softwareverteilungsverfahren kann somit vollständig auf dem Fahrzeug stattfinden.

Eine weitere bevorzugte Ausführungsform des erfindungsgemäßen Softwareverteilungsverfahrens umfasst: Bereitstellen der Netzadresse als Teil einer Konfigurationsinformation, welche weiter wenigstens
- mindestens eine Paketinformation, welche ein für die Komponente vorgesehenes Softwarepaket identifiziert,
- eine Netzadresse, insbesondere eine IP-Adresse und/oder eine Netzmaske, der Komponente,
- einen Host-Namen zum Adressieren der Komponente,
- eine Gateway-Adresse einer Gateway-Einheit für die Komponente, und/oder
eine Netzadresse und/oder einen Host-Namen eines der Komponente zugeordneten Zeit-Servers des Kommunikationsnetzes
umfasst.

Der Fachmann versteht den Begriff "Gateway-Einheit" vorzugsweise als eine Komponente, welche zur Verbindung von Netzen ausgebildet ist. Die Gateway-Einheit verbindet beispielsweise zwei Subnetze des Betreibernetzes datentechnisch miteinander. Die Netzadresse der Gateway-Einheit wird fachmännisch häufig als Gateway-Adresse bezeichnet. Sie dient beispielsweise dazu, Komponenten, Geräte bzw. Teilnehmer in einem anderen Subnetz desselben Betreibernetzes oder in einem anderen Netz auf der Landseite zu initiieren.

Der Zeit-Server ist vorzugsweise als NTP-Server (NTP: Network Time Protokoll) ausgebildet.

Bevorzugt wird die bereitgestellte Konfigurationsinformation an die angeschlossene Komponenten übertragen. Weiter vorzugsweise wird die angeschlossene Komponente anhand der Konfigurationsinformation konfiguriert, beispielsweise wird der Komponente eine IP-Adresse zugewiesen.

Die Erfindung betrifft ferner eine Konfigurationsserver-Einheit für ein spurgebundenes Fahrzeug, welche an ein Kommunikationsnetz des spurgebundenen Fahrzeugs datentechnisch anschließbar ist und welche ausgebildet ist, anhand einer Zugangspunkt-Information zum Identifizieren eines Zugangspunkts des Kommunikationsnetzes, an dem eine Komponente angeschlossen ist, eine Netzadresse einer ersten Verteilungsserver-Einheit bereitzustellen. Vorzugsweise ist die Konfigurationsserver-Einheit ausgebildet, der Komponente die Netzadresse bereitzustellen.

Die Erfindung betrifft ferner ein Softwareverteilungssystem für ein spurgebundenes Fahrzeug gemäß Anspruch 12, umfassend:
- ein Kommunikationsnetz des spurgebundenen Fahrzeugs, welches wenigstens einen Zugangspunkt aufweist,
- eine Konfigurationsserver-Einheit, welche an das Kommunikationsnetz datentechnisch angeschlossen ist, und
- eine Komponente, welche an den Zugangspunkt angeschlossen ist.

Die Konfigurationsserver-Einheit ist ausgebildet, eine Netzadresse einer ersten Verteilungsserver-Einheit bereitzustellen. Die Komponente ist ausgebildet, eine Installationssoftware von der ersten Verteilungsserver-Einheit anhand der Netzadresse zu laden.

Die Konfigurationsserver-Einheit ist vorzugsweise ausgebildet, der Komponente die Netzadresse bereitzustellen. Weiter vorzugsweise weist das Kommunikationsnetz eine Mehrzahl von Zugangspunkten auf, wobei die Komponente an wenigstens einen der Zugangspunkte anschließbar ist und wobei die Konfigurationsserver-Einheit ausgebildet ist, die Netzadresse in Abhängigkeit eines Zugangspunkts, an den die Komponente angeschlossen ist, bereitzustellen.

Die Erfindung betrifft ferner ein spurgebundenes Fahrzeug, welches ein Softwareverteilungssystem nach der vorstehend beschriebenen Art aufweist.

Zu Ausführungsformen, Ausführungsdetails und Vorteilen der Konfigurationsserver-Einheit und des Softwareverteilungssystems kann auf die vorhergehende Beschreibung zu den entsprechenden Merkmalen des erfindungsgemäßen Softwareverteilungsverfahrens Bezug genommen werden.

Ein Ausführungsbeispiel der Erfindung wird nun anhand der Zeichnungen erläutert. Es zeigen:
- Figur 1:: eine schematische Querschnittansicht eines spurgebundenen Fahrzeugs gemäß einem Ausführungsbeispiel eines erfindungsgemäßen Kommunikationssystems und
- Figur 2:: ein schematisches Ablaufdiagramm eines Ausführungsbeispiels eines erfindungsgemäßen Verfahrens.

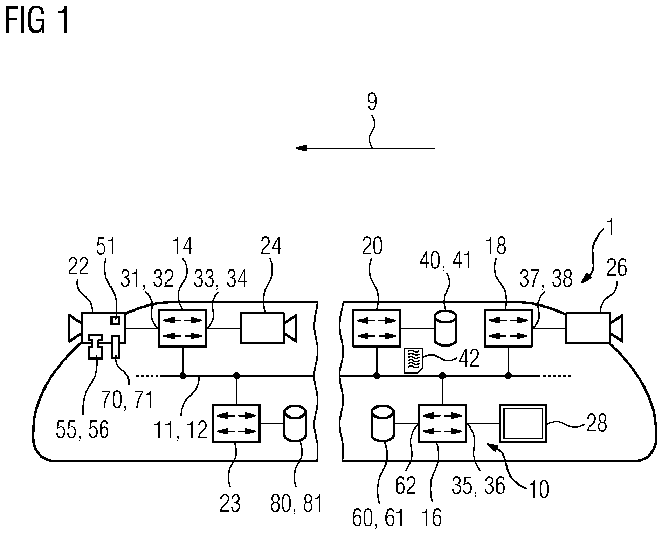

Figur 1 zeigt ein spurgebundenes Fahrzeug 1 in einer seitlichen Querschnittansicht. In der betrachteten Ausführung ist das spurgebundenes Fahrzeug 1 als Verband von mehreren Wagen ausgebildet, die miteinander mechanisch und datentechnisch gekoppelt sind und eine Zugeinheit bilden. In der betrachteten Ausführung ist das spurgebundene Fahrzeug 1 als sogenannter Triebzug ausgebildet.

Das spurgebundene Fahrzeug 1 weist ein Softwareverteilungssystem 10 auf, welches ein Kommunikationsnetz 11 umfasst. Das Kommunikationsnetz 11 ist als Ethernet-Netzwerk 12 ausgebildet und umfasst mehrere Switch-Einheiten 14, 16, 18, 20 und 23. Die Switch-Einheiten weisen jeweils mehrere Ports auf. So weist die Switch-Einheit 14 beispielsweise einen Port 32 und einen Port 34 auf. Die Switch-Einheit 16 weist u. a. einen Port 36 und die Switch-Einheit 18 weist u. a. einen Port 38 auf. Die Switch-Einheiten 14, 16 und 18 bilden mit ihren Ports Zugangspunkte 31, 33, 35 und 37 zum datentechnischen Anschließen von Komponenten an das Kommunikationsnetz 11.

Als Komponenten können beispielsweise Kameraeinheiten 22, 24 und 26, eine Anzeigeeinheit 28, Fahrgastzähleinheiten, etc. datentechnisch an das Kommunikationsnetz 11 angeschlossen werden.

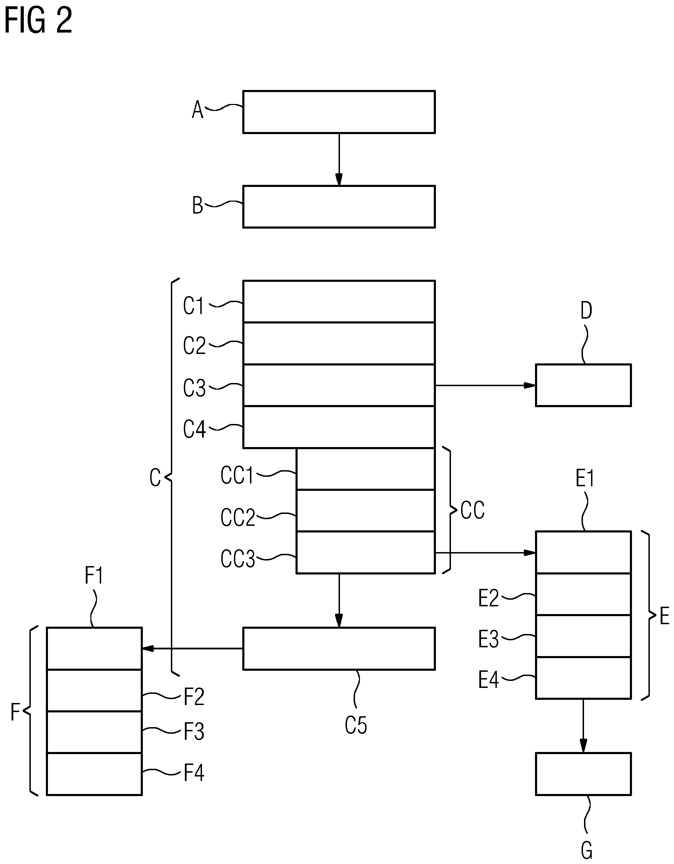

Das in den Figuren 1 und 2 dargestellte Ausführungsbeispiel wird im Folgenden anhand der Kameraeinheit 22 (als Beispiel für eine Komponente) beschrieben und lässt sich selbstverständlich in analoger Weise auf andere Komponenten - wie beispielsweise die Kameraeinheiten 24 und 26 oder die Anzeigeeinheit 28 - übertragen.

Die Kameraeinheit 22 wird in einem Verfahrensschritt A datentechnisch an das Kommunikationsnetz 11, nämlich an den Port 32 der Switch-Einheit 14 angeschlossen.

Eine Konfigurationsserver-Einheit 40 ist datentechnisch an das Kommunikationsnetz 11, insbesondere an einen Port der Switch-Einheit 20, angeschlossen. Die Konfigurationsserver-Einheit 40 ist als DHCP-Server 41 ausgebildet.

Das spurgebundenes Fahrzeug 1 bewegt sich in einem Fahrbetrieb in dem gezeigten Ausführungsbeispiel in einer Fahrtrichtung 9. Die Kameraeinheit 22 bildet bei dieser Fahrtrichtung 9 eine Frontkamera, die in Fahrtrichtung 9 nach vorn ausgerichtet ist. Bei einer entgegengesetzten Fahrtrichtung bildet die Kameraeinheit 22 eine rückwärtig ausgerichtete Kameraeinheit.

Grundsätzlich ist bei dem gezeigten Ausführungsbeispiel jedem Port ein Einbauort für die an den Port angeschlossene Komponente zugedacht. So ist beispielsweise der Port 32 für den Anschluss einer Kameraeinheit vorgesehen, welche bei Fahrtrichtung 9 als Frontkamera eingebaut ist. Mit anderen Worten: Jede Kameraeinheit, die an den Port 32 angeschlossen wird, soll den gleichen Einbauort wie die Kameraeinheit 22 aufweisen. Bei einer Vorgabe dieser Art ist es wünschenswert, die angeschlossene Kameraeinheit einbauortsabhängig zu konfigurieren und vorgesehene Software zu installieren. Beispielsweise wird jede Kameraeinheit, die an den Port 32 angeschlossen wird, im Wesentlichen gleich konfiguriert und mit der gleichen Software versehen.

In einem Verfahrensschritt B wird die Kameraeinheit 22 eingeschaltet.

Auf das Anschließen A und Einschalten B hin führt die Kameraeinheit 22 in einem Verfahrensschritt C mittels einer Recheneinheit ein Universal-Bootloader-Skript 51 aus, welches in einem Flash-Speicher der Kameraeinheit 22 gespeichert ist. Das Ausführen C umfasst ein Zugreifen C1 auf ein erweitertes Dateisystem, insbesondere eine Extended File System (z.B. ext2, ext3 oder ext4), welches mittels einer ersten Speicher-einheit 55 gespeichert ist. Die erste Speichereinheit 55 ist als SDHC-Karte 56 (SDHC: Secure Digital High Capacity) ausgebildet, welche in einen Kartensteckplatz der Kameraeinheit 22 eingesteckt ist. In einem weiteren Verfahrensschritt C2 wird bei dem Ausführen C verifiziert, dass es sich bei dem erweiterten Dateisystem um ein gültiges Dateisystem handelt. Wenn dies der Fall ist, wird eine Installations-Software, welche einen Kernel und einen Device-Tree umfasst, beim Ausführen C in einem Verfahrensschritt C3 geladen und der Kernel von der SDHC-Karte 56 ausgeführt.

Bei einem erfolgreichen Laden C3 wird die Installations-Software mittels der Kameraeinheit 22 in einem Verfahrensschritt D ausgeführt.

Wenn das Laden C3 der Installationssoftware von der SDHC-Karte 56 fehlschlägt, beispielsweise wenn kein gültiges Dateisystem vorhanden ist, wird die Installations-Software mittels der Kameraeinheit 22 in einem Verfahrensschritt C4 (beim Ausführen C) von einer ersten Verteilungsserver-Einheit 60, die datentechnisch an das Kommunikationsnetz 11 angeschlossen ist, geladen. Insbesondere ist die erste Verteilungsserver-Einheit 60 an einen Port 62 des Switches 16 angeschlossen und als TFTP-Server 61 (TFTP: Trivial File Transfer Protocol) ausgebildet. Ein auf der SDHC-Karte 56 vorhandenes Dateisystem gilt als gültig, wenn der Inhalt einer gespeicherten Stempeldatei (stamp file) geladen werden kann.

Damit die Installations-Software von der ersten Verteilungsserver-Einheit 60 geladen werden kann, benötigt die Kameraeinheit 22 als Information zumindest eine Netzadresse der ersten Verteilungsserver-Einheit 60. Dafür stellt die Konfigurationsserver-Einheit 40 eine Konfigurationsinformation 42 in einem Verfahrensschritt CC bereit, um die Konfigurationsinformation 42 der Kameraeinheit 22 zuzuweisen.

Dazu wird in einem Verfahrensschritt CC1 auf das Anschließen A, Einschalten B und fehlgeschlagene Laden C3 hin eine Switch-Information zum Identifizieren der Switch-Einheit 14 und eine Port-Information zum Identifizieren des Ports 32 an die Konfigurationsserver-Einheit 40 auf einem Weg über das Kommunikationsnetz 11 übertragen. Die Switch-Information und die Port-Information bilden ein Informationspaar, beispielsweise "SW14(1)", welches für Port Nr. 1 des Switches 14 steht. Das Informationspaar "SW14(1)" wird von der Switch-Einheit 14 ausgesendet und an die Konfigurationsserver-Einheit 40 übertragen. Die Konfigurationsserver-Einheit 40 weist eine Datenbank auf, welche dem Informationspaar "SW14(1)" eine Konfigurationsinformation 42 zuordnet. Die Konfigurationsinformation 42 repräsentiert eine für die Kameraeinheit 22 vorgesehene Konfiguration.

Die Konfigurationsinformation 42 umfasst beispielsweise eine IP-Adresse, welche für eine Adressierung der Kameraeinheit 22 vorgesehen ist. Auf diese Weise kann jeder Kameraeinheit, die an den Port 32 angeschlossene wird, eine vorgegebene (beispielsweise die gleiche) IP-Adresse zugewiesen werden.

Zudem können weitere Informationen mittels der Konfigurationsinformation 42 bereitgestellt werden. So kann der angeschlossenen Kameraeinheit 22 beispielsweise eine Subnetzmaske sowie ein Host-Name zugewiesen werden.

Zudem kann der Kameraeinheit 22 beispielsweise eine Netzadresse einer datentechnisch an das Kommunikationsnetz 11 angeschlossenen Gateway-Einheit bereitgestellt werden. Die Netzadresse der Gateway-Einheit (sogenannte Gateway-Adresse) dient beispielsweise für die Kommunikation der Komponente mit einer Komponente eines anderen Subnetzes desselben Kommunikationsnetzes 11.

Für eine Synchronisation eines Zeitgebers der Komponente kann eine IP-Adresse und/oder ein Host-Name eines NTP-Servers des Kommunikationsnetzes bereitgestellt werden.

Zudem kann der Komponente eine IP-Adresse eines an das Kommunikationsnetz 11 angeschlossenen DNS-Servers für eine Kommunikation der Komponente mit dem DNS-Server bereitgestellt werden.

Für den Zweck der erfindungsgemäßen Lösung wird der Komponente insbesondere eine Netzadresse (z. B. eine IP-Adresse) zum Adressieren der ersten Verteilungsserver-Einheit 60 in einem Verfahrensschritt CC2 (als Teil der Konfigurationsinformation 42) bereitgestellt.

Des Weiteren umfasst die Konfigurationsinformation 42 eine Paketinformation, welche ein für die Kameraeinheit 22 vorgesehenes Softwarepaket identifiziert. Beispielsweise umfasst die Paketinformation eine Liste von mehreren für die Kameraeinheit 22 vorgesehenen Softwarepaketen.

Für das Zuweisen der Konfigurationsinformation 42 wird diese mittels der Konfigurationsserver-Einheit 40 unter Anwendung von DHCP (DHCP: Dynamic Host Configuration Protocol) an die Kameraeinheit 22, welche an den Zugangspunkt 31 angeschlossen ist, in einem Verfahrensschritt CC3 gesendet und über das Kommunikationsnetz 11 übertragen.

Anhand der Netzadresse der ersten Verteilungsserver-Einheit 60 wird die Kameraeinheit 22 in die Lage versetzt, beim Ausführen C in dem Verfahrensschritt C4 eine Installations-Software, welche einen Kernel, einen Device-Tree und eine Ausgangspartition im Arbeitsspeicher (initrd: initial RAM disk; RAM: Random Access Memory) umfasst, von der ersten Verteilungsserver-Einheit 60 zu laden.

Bei einem erfolgreichen Laden C4 wird die Installations-Software mittels der Kameraeinheit 22 in einem Verfahrensschritt E ausgeführt.

Das Ausführen E der Installations-Software umfasst ein Laden E1 einer Basissoftware mittels der Kameraeinheit 22 von einer datentechnisch an das Kommunikationsnetz 11 angeschlossenen zweiten Verteilungsserver-Einheit 80. Die zweite Verteilungsserver-Einheit 80 ist an einen Port des Switches 23 angeschlossen und als HTTP-Server 81 ausgebildet.

Mittels der Installations-Software wird eine an die Komponente datentechnisch angeschlossene Speichereinheit (beispielsweise eine SDHC-Karte) partitioniert (Verfahrensschritt E2), ein Dateisystem (beispielsweise ein ext4-Dateisystem) erzeugt (Verfahrensschritt E3) und die Basissoftware installiert (Verfahrensschritt E4).

Wenn das Laden C4 der Installationssoftware von der ersten Verteilungsserver-Einheit 60 fehlschlägt, beispielsweise wenn keine datentechnische Verbindung zwischen Kameraeinheit 22 und der ersten Verteilungsserver-Einheit 60 besteht, wird eine Installationssoftware in einem Verfahrensschritt C5 beim Ausführen C von einer datentechnisch an die Kameraeinheit 22 angeschlossenen zweiten Speichereinheit 70 geladen und in einem Verfahrensschritt F ausgeführt. Die zweite Speichereinheit 70 ist als USB-Stick 71 ausgebildet, der mittels eines USB-Ports an die Kameraeinheit 22 angeschlossen ist.

Das Ausführen F der Installations-Software umfasst ein Laden F1 einer Basissoftware von der zweiten Speichereinheit 70. Das Ausführen F der Installationssoftware umfasst weiter ein Partitionieren F2 einer an die Kameraeinheit 22 datentechnisch angeschlossene Speichereinheit (beispielsweise eine SDHC-Karte), ein Erzeugen F3 eines Dateisystems (beispielsweise ein ext4-Dateisystem) und Installieren F4 der Basissoftware. Zudem wird ein Softwarepaket-Repository beim Ausführen der Basissoftware bereitgestellt. Das Softwarepaket-Repository dient zum Deponieren eines oder mehrere für die Komponenten vorgesehenen Softwarepakete.

Wenn das Laden C4 der Installationssoftware von der ersten Verteilungsserver-Einheit 60 erfolgreich ist (d. h. nicht fehlschlägt), wird die von der zweiten Verteilungsserver-Einheit 80 geladene und installierte Basissoftware bei einem ersten Hochfahren (nach dem Installieren) der Kameraeinheit 22 in einem Verfahrensschritt G ausgeführt. Bei dem Ausführen G wird eine Paketinformation von der Konfigurationsserver-Einheit 40 geladen. Die Paketinformation umfasst eine Liste von Softwarepaketen, die für die Komponente vorgesehen ist. Weiter wird beim Ausführen G ein für die Kameraeinheit 22 vorgesehenes Softwarepaket anhand der Paketinformation von einem Software-Repository des HTTP-Servers 81 geladen. Das Softwarepaket wird installiert, wenn sich bei einem Prüfschritt ergibt, dass das Softwarepaket noch nicht installiert wurde.

## Patentansprüche

1. Softwareverteilungsverfahren für ein Kommunikationsnetz (11) eines spurgebundenen Fahrzeugs (1), bei welchem eine Komponente (22, 24, 26, 28), welche eine Datenendeinrichtung ist, an einen Zugangspunkt (31, 33, 35, 37) des Kommunikationsnetzes (11) angeschlossen ist, umfassend:
- Anschließen (A) der Komponente (22, 24, 26, 28) an einen Zugangspunkt (31; 33; 35; 37) einer Mehrzahl von Zugangspunkten (31, 33, 35, 37) des Kommunikationsnetzes (11),
- Bereitstellen (CC) einer Netzadresse einer ersten Verteilungsserver-Einheit (60) mittels einer an das Kommunikationsnetz (11) datentechnisch angeschlossenen Konfigurationsserver-Einheit (40),
- Übertragen der bereitgestellten Netzadresse an die angeschlossene Komponente und
- Laden (C4) einer Installations-Software mittels der Komponente (22, 24, 26, 28) von der ersten Verteilungsserver-Einheit (60) anhand der Netzadresse,
wobei das Bereitstellen (CC) der Netzadresse in Abhängigkeit des Zugangspunkts (31, 33, 35, 37), an den die Komponente (22, 24, 26, 28) angeschlossen ist, erfolgt.

2. Softwareverteilungsverfahren nach Anspruch 1,
wobei das Laden (C4) durch Ausführen (C) eines Bootloader-Skripts (51) mittels der Komponente (22, 24, 26, 28) ausgelöst wird.

3. Softwareverteilungsverfahren nach wenigstens einem der vorhergehenden Ansprüche,
wobei die erste Verteilungsserver-Einheit (60) einen TFTP-Server (61) umfasst.

4. Softwareverteilungsverfahren nach wenigstens einem der vorhergehenden Ansprüche,
wobei die Konfigurationsserver-Einheit (40) einen DHCP-Server (41) umfasst.

5. Softwareverteilungsverfahren nach wenigstens einem der vorhergehenden Ansprüche,
wobei das Laden (C4) der Installations-Software von der ersten Verteilungsserver-Einheit (60) erfolgt, wenn ein Laden (C3) einer Installations-Software von einer an die Komponente (22, 24, 26, 28) datentechnisch angeschlossenen ersten Speicher-Einheit (55) fehlschlägt.

6. Softwareverteilungsverfahren nach wenigstens einem der vorhergehenden Ansprüche,
wobei - bei einem Fehlschlagen des Ladens (C4) der Installations-Software von der ersten Verteilungsserver-Einheit (60)
- ein Laden (C5) einer Installations-Software von einer an die Komponente (22, 24, 25, 27) datentechnisch angeschlossenen zweiten Speicher-Einheit (70) mittels der Komponente (22, 24, 25, 27) initiiert wird.

7. Softwareverteilungsverfahren nach wenigstens einem der vorhergehenden Ansprüche umfassend:
Ausführen (E) der geladenen Installations-Software mittels der Komponente (22, 24, 25, 27), wobei das Ausführen (E) ein Laden (E1) einer für die Komponente (22, 24, 25, 27) vorgesehenen Basissoftware mittels der Komponente (22, 24, 26, 28) von einer zweiten Verteilungsserver-Einheit (80) umfasst.

8. Softwareverteilungsverfahren nach Anspruch 7,
wobei die zweite Verteilungsserver-Einheit (80) einen HTTP-Server (81) umfasst.

9. Softwareverteilungsverfahren nach Anspruch 7 oder 8 umfassend:
Ausführen (G) der Basissoftware bei einem Hochfahren der Komponente (22, 24, 26, 28),
wobei das Ausführen ein Laden und Installieren eines für die Komponenten (22, 24, 25, 27) vorgesehenen Softwarepakets umfasst.

10. Softwareverteilungsverfahren nach wenigstens einem der vorhergehenden Ansprüche,
wobei die erste (60) und/oder zweite Verteilungsserver-Einheit (80) eine Verteilungsserver-Einheit des spurgebundenen Fahrzeugs (1) ist.

11. Softwareverteilungsverfahren nach wenigstens einem der vorhergehenden Ansprüche umfassend:
Bereitstellen (CC) der Netzadresse als Teil einer Konfigurationsinformation (42), welche weiter wenigstens
- eine Paketinformation, welche ein für die Komponente (22, 24, 26, 28) vorgesehenes Softwarepaket identifiziert,
- eine Netzadresse, insbesondere eine IP-Adresse und/oder eine Netzmaske, der Komponente (22, 24, 26, 28),
- einen Host-Namen zum Adressieren der Komponente (22, 24, 26, 28),
- eine Gateway-Adresse einer Gateway-Einheit für die Komponente (22, 24, 26, 28) und/oder
- eine Netzadresse und/oder einen Host-Namen eines der Komponente (22, 24, 26, 28) zugeordneten Zeit-Servers des Kommunikationsnetzes (11)
umfasst.

12. Softwareverteilungssystem für ein spurgebundenes Fahrzeug (1) umfassend:
- ein Kommunikationsnetz (11) des spurgebundenen Fahrzeugs (1), welches wenigstens einen Zugangspunkt (31, 33, 35, 37) einer Mehrzahl von Zugangspunkten (31, 33, 35, 37) des Kommunikationsnetzes (11) aufweist,
- eine Konfigurationsserver-Einheit (40), welche an das Kommunikationsnetz (11) datentechnisch angeschlossen ist, und
- eine Komponente (22, 24, 26, 28), welche an den Zugangspunkt (31, 33, 35, 37) der Mehrzahl von Zugangspunkten (31, 33, 35, 37) des Kommunikationsnetzes (11) angeschlossen ist,
wobei die Konfigurationsserver-Einheit (40) ausgebildet ist, eine Netzadresse einer ersten Verteilungsserver-Einheit (60) in Abhängigkeit des Zugangspunkts (31, 33, 35, 37) an die Komponente bereitzustellen, und wobei die Komponente (22, 24, 26, 28) ausgebildet ist, eine Installations-Software von der ersten Verteilungsserver-Einheit (60) anhand der Netzadresse zu laden.

13. Spurgebundenes Fahrzeug, welches ein Softwareverteilungssystem (10) nach Anspruch 12 aufweist.

## Claims

1. Software distribution method for a communication network (11) of a railbound vehicle (1), in which a component (22, 24, 26, 28), which is a data terminal facility, is connected to an access point (31, 33, 35, 37) of the communication network (11), comprising:
- connecting (A) the component (22, 24, 26, 28) to an access point (31; 33; 35; 37) of a plurality of access points (31, 33, 35, 37) of the communication network (11),
- providing (CC) a network address of a first distribution server unit (60) by means of a configuration server unit (40) connected via data link to the communication network (11),
- transmitting the provided network address to the connected component and
- loading (C4) a piece of installation software by means of the component (22, 24, 26, 28) from the first distribution server unit (60) on the basis of the network address,
wherein the network address is provided (CC) as a function of the access point (31, 33, 35, 37) to which the component (22, 24, 26, 28) is connected.

2. Software distribution method according to claim 1,
wherein the loading (C4) is triggered by executing (C) a boot loader script (51) by means of the component (22, 24, 26, 28).

3. Software distribution method according to at least one of the preceding claims,
wherein the first distribution server unit (60) comprises a TFTP server (61).

4. Software distribution method according to at least one of the preceding claims,
wherein the configuration server unit (40) comprises a DHCP server (41).

5. Software distribution method according to at least one of the preceding claims,
wherein the installation software is loaded (C4) from the first distribution server unit (60), when a loading (C3) of a piece of installation software from a first storage unit (55) connected via data link to the component (22, 24, 26, 28) goes awry.

6. Software distribution method according to at least one of the preceding claims,
wherein when the loading (C4) of the installation software from the first distribution server unit (60) goes awry,
- a loading (C5) of a piece of installation software from a second storage unit (70) connected via data link to the component (22, 24, 25, 27) is initiated by means of the component (22, 24, 25, 27).

7. Software distribution method according to at least one of the preceding claims, comprising:
executing (E) the loaded installation software by means of the component (22, 24, 25, 27), wherein the execution (E) comprises a loading (E1) of a piece of base software provided for the component (22, 24, 25, 27) by means of the component (22, 24, 26, 28) from a second distribution server unit (80).

8. Software distribution method according to claim 7,
wherein the second distribution server unit (80) comprises an HTTP server (81).

9. Software distribution method according to claim 7 or 8, comprising:
executing (G) the base software when powering up the component (22, 24, 26, 28),
wherein the execution comprises loading and installing a software packet provided for the component (22, 24, 25, 27).

10. Software distribution method according to at least one of the preceding claims,
wherein the first (60) and/or second distribution server unit (80) is a distribution server unit of the railbound vehicle (1) .

11. Software distribution method according to at least one of the preceding claims comprising:
providing (CC) the network address as part of an item of configuration information (42), which further comprises at least
- packet information, which identifies a software packet provided for the component (22, 24, 26, 28),
- a network address, in particular an IP address and/or a network mask, of the component (22, 24, 26, 28),
- a host name for addressing the component (22, 24, 26, 28) ,
- a gateway address of a gateway unit for the component (22, 24, 26, 28) and/or
- a network address and/or a host name of a time server of the communication network (11) assigned to the component (22, 24, 26, 28).

12. Software distribution system for a railbound vehicle (1) comprising:
- a communication network (11) of the railbound vehicle (1), which has at least one access point (31, 33, 35, 37) of a plurality of access points (31, 33, 35, 37) of the communication network (11),
- a configuration server unit (40), which is connected via data link to the communication network (11), and
- a component (22, 24, 26, 28), which is connected to the access point (31, 33, 35, 37) of the plurality of access points (31, 33, 35, 37) of the communication network (11), wherein the configuration server unit (40) is embodied to provide a network address of a first distribution server unit (60) as a function of the access point (31, 33, 35, 37) to the component, and
wherein the component (22, 24, 26, 28) is embodied to load a piece of installation software from the first distribution server unit (60) on the basis of the network address.

13. Railbound vehicle, which has a software distribution system (10) according to claim 12.

## Revendications

1. Dispositif de répartition de logiciel pour un réseau (11) de communication d'un véhicule (1) guidé sur rail, dans lequel un composant (22, 24, 26, 28), qui est un terminal de données, est raccordé à un point (31, 33, 35, 37) d'accès du réseau (11) de communication, comprenant :
- raccordement (A) du composant (22, 24, 26, 28) à un point (31 ; 33 ; 35 ; 37) d'accès parmi une pluralité de points (31, 33, 35, 37) d'accès du réseau (11) de communication,
- mise (CC) d'une adresse de réseau à disposition d'une première unité (60) de serveur de répartition au moyen d'une unité (40) de serveur de configuration raccordée en technique de données au réseau (11) de communication,
- transmission de l'adresse de réseau mise à disposition au composant raccordé et
- chargement (C4) d'un logiciel d'installation au moyen du composant (22, 24, 26, 28) par l'unité (60) de serveur de répartition à l'aide de l'adresse de réseau,
dans lequel la mise (CC) à disposition de l'adresse de réseau s'effectue en fonction du point (31, 33, 35, 37) d'accès, auquel le composant (22, 24, 26, 28) est raccordé.

2. Dispositif de répartition de logiciel suivant la revendication 1,
dans lequel on déclenche le chargement (C4) par exécution (C) d'un boatloader skrips (51) au moyen du composant (22, 24, 26, 28).

3. Dispositif de répartition de logiciel suivant au moins l'une des revendications précédentes,
dans lequel la première unité (60) de serveur de répartition comprend un serveur TFTP (61).

4. Dispositif de répartition de logiciel suivant au moins l'une des revendications précédentes,
dans lequel l'unité (40) de serveur de configuration comprend un serveur DHCP (41).

5. Dispositif de répartition de logiciel suivant au moins l'une des revendications précédentes,
dans lequel le chargement (C4) du logiciel d'installation s'effectue par la première unité (60) de serveur de répartition, lorsque qu'échoue un chargement (C3) d'un logiciel d'installation par une première unité (55) de mémoire raccordée en technique de données au composant (22, 24, 26, 28).

6. Dispositif de répartition de logiciel suivant au moins l'une des revendications précédentes,
dans lequel - lors d'un échec du chargement (C4) du logiciel d'installation par la première unité (60) de serveur de répartition
- on lance, au moyen du composant (22, 24, 25, 27), un chargement (C5) d'un logiciel d'installation par une deuxième unité (70) de mémoire raccordée en technique de données au composant (22, 24, 25, 27).

7. Dispositif de répartition de logiciel suivant au moins l'une des revendications précédentes comprenant :
exécution (E) du logiciel d'installation au moyen du composant (22, 24, 25, 27), dans lequel l'exécution (E) comprend un chargement (E1) d'un logiciel de base prévu pour le composant (22, 24, 25, 27) au moyen du composant (22, 24, 26, 28) par une deuxième unité (80) de serveur de répartition.

8. Dispositif de répartition de logiciel suivant la revendication 7,
dans lequel la deuxième unité (80) de serveur de répartition comprend un serveur HTTP (81).

9. Dispositif de répartition de logiciel suivant la revendication 7 ou 8 comprenant :
exécution (G) du logiciel de base au démarrage du composant (22, 24, 26, 28),
dans lequel l'exécution comprend un chargement et une installation d'un paquet logiciel prévu pour les composants (22, 24, 25, 27).

10. Dispositif de répartition de logiciel suivant au moins l'une des revendications précédentes,
dans lequel la première (60) et/ou la deuxième unité (80) de serveur de répartition est une unité de serveur de répartition du véhicule (1) guidé sur rail.

11. Dispositif de répartition de logiciel suivant au moins l'une des revendications précédentes comprenant :
mise (CC) à disposition de l'adresse de réseau comme partie d'une information (42) de configuration, qui comprend en outre
- une information de paquet, qui identifie un paquet logiciel prévu pour le composant (22, 24, 26, 28),
- une adresse de réseau, en particulier une adresse IP et/ou un masque de réseau du composant (22, 24, 26, 28),
- une dénomination d'hôte pour l'adressage du composant (22, 24, 26, 28),
- une adresse de passerelle d'une unité de passerelle pour le composant (22, 24, 26, 28), et/ou
- une adresse de réseau et/ou une dénomination d'hôte d'un serveur de temps, associé au composant (22, 24, 26, 28), du réseau (11) de communication.

12. Système de répartition de logiciel pour un véhicule (1) guidé sur rail comprenant :
- un réseau (11) de communication du véhicule (1) guidé sur rail, qui a au moins un point (31, 33, 35, 37) d'accès parmi une pluralité de points (31, 33, 35, 37) d'accès du réseau (11) de communication,
- une unité (40) de serveur de configuration, qui est raccordée en technique de données au réseau (11) de communication, et
- un composant (22, 24, 26, 28), qui est raccordé au point (31, 33, 35, 37) d'accès parmi la pluralité de points (31, 33, 35, 37) d'accès du réseau (11) de communication,
dans lequel l'unité (40) de serveur de configuration est constituée pour mettre une adresse de réseau à disposition d'une première unité (60) de serveur de répartition en fonction du point (31, 33, 35, 37) d'accès au composant, et dans lequel le composant (22, 24, 26, 28) est constitué pour charger, à l'aide de l'adresse de réseau, un logiciel d'installation par la première unité (60) de serveur de répartition.

13. Véhicule guidé sur rail, qui a un système (10) de répartition de logiciel suivant la revendication 12.
